# EUROPÄISCHE PATENTANMELDUNG

(11) **EP 1 191 648 A2**
(43) Veröffentlichungstag der Anmeldung: **27.03.2002**
(21) Anmeldenummer: 01121879.9
(22) Anmeldetag: 12.09.2001
(51) Int. Cl.: H01S 3/038, H01S 3/041

(54) **Gaslaser mit koaxialen Elektrodenrohren**

(30) Priorität: 22.09.2000 DE 10047020
(71) Anmelder: TRUMPF LASERTECHNIK GmbH, D-71254 Ditzingen (DE)
(72) Erfinder: Zeller, Thomas, 71063 Sindelfingen (DE)
(74) Vertreter: KOHLER SCHMID + PARTNER

(57) **Zusammenfassung**

Ein Laser mit wenigstens zwei Elektrodenrohren (2,3), von denen das eine (3) innerhalb des anderen (2) angeordnet ist, weist eine Kühleinrichtung (18) auf, die ihrerseits zumindest eine innerhalb des inneren Elektrodenrohres (3) angeordnete innere Kühlmittelleitung (11) und/oder zumindest eine außerhalb des äußeren Elektrodenrohres angeordnete äußere Kühlmittelleitung (10) umfasst. Zur Gewährleistung eines wirksamen Wärmeüberganges wird mittels einer inneren Stützeinrichtung (17) die innere Kühlmittelleitung (11) an dem inneren Elektrodenrohr (3) oder einer damit wärmeübertragend in Verbindung stehenden Fläche anliegend gehalten. Entsprechend wird die äußere Kühlmittelleitung (10) mittels einer äußeren Stützeinrichtung (16) mit ihrer Wandung an dem äußeren Elektrodenrohr (2) oder einer damit wärmeübertragend in Verbindung stehenden Fläche anliegend gehalten.

## Beschreibung

Die Erfindung betrifft einen Laser mit wenigstens zwei Elektrodenrohren, deren Achsen gleichgerichtet verlaufen und von denen das eine als inneres Elektrodenrohr unter Bildung eines als Entladungsraum dienenden Zwischenraumes innerhalb des anderen, äußeren Elektrodenrohres angeordnet ist sowie mit einer Kühleinrichtung, welche zumindest eine innerhalb des inneren Elektrodenrohres angeordnete innere Kühlmittelleitung mit einer Wandung und/oder zumindest eine außerhalb des äußeren Elektrodenrohres angeordnete äußere Kühlmittelleitung mit einer Wandung umfasst, wobei die innere und/oder die äußere Kühlmittelleitung an ihrer Wandung mit dem zugeordneten Elektrodenrohr in wärmeübertragender Verbindung steht. Die Erfindung betrifft des Weiteren ein Verfahren zur Herstellung eines derartigen Lasers mit zumindest einer plastisch verformbaren inneren und/oder zumindest einer plastisch verformbaren äußeren Kühlmittelleitung. Schließlich betrifft die Erfindung eine Vorrichtung zur Durchführung des letztgenannten Herstellungsverfahrens.

Bekanntermaßen ist der in dem Entladungsraum eines Lasers ablaufende Laserprozess mit der Entwicklung von Wärme verbunden, die zur Erhaltung der Funktionsfähigkeit der Gesamtanordnung abgeführt werden muss. Diese Wärmeabfuhr kann durch Kühlung der Laserelektroden erfolgen.

Ein entsprechender Laser der eingangs genannten Art in Form eines Lasers koaxialer Bauart ist offenbart in DE-U-299 12 670. Die Kühleinrichtung dieses Lasers umfasst als innere Kühlmittelleitung eine innere Kühlwendel und als äußere Kühlmittelleitung eine äußere Kühlwendel. Beide Kühlwendeln werden von einem koaxial mit den Elektrodenrohren gebogenen Rundrohr gebildet, das sich mit linienartiger Berührung an die ihm zugewandte achsparallele Mantelfläche des zugeordneten Elektrodenrohres anschmiegt. Bei der Herstellung des vorbekannten Lasers werden die Rundrohre für die Kühlmittelleitungen über Dornen zu Wendeln gebogen. Die Durchmesser der Dorne sind dabei so gewählt, das die innere Kühlwendel einen dem Innendurchmesser des zugeordneten inneren Elektrodenrohres entsprechenden Außendurchmesser und die äußere Kühlwendel eine dem Außendurchmesser des zugeordneten äußeren Elektrodenrohres entsprechenden Innendurchmesser erhält. Anschließend wird die innere Kühlwendel in das Innere des inneren Elektrodenrohres ein-, die äußere Kühlwendel auf den Außenmantel des äußeren Elektrodenrohres aufgeschoben. Im Falle einer gattungsfremden, aus praktischen Anwendungen vorbekannten Laserbauart werden unmittelbar in die Wandungen der Elektrodenrohre wendelartige Nuten eingefräst, die bei Betrieb des Lasers als Strömungswege des verwendeten Kühlmediums dienen.

Die vorliegende Erfindung hat sich zum Ziel gesetzt, einen Laser zu schaffen, an welchem mit konstruktiv und fertigungstechnisch einfachen Maßnahmen eine wirksame Kühlung des zwischen den Elektrodenrohren liegenden Entladungsraumes gewährleistet ist. Die Erfindung hat sich weiterhin zum Ziel gesetzt, ein entsprechendes einfaches Fertigungsverfahren sowie eine Vorrichtung zur Durchführung eines derart einfachen Fertigungsverfahrens bereitzustellen.

Die erfindungsgemäßen Aufgabenlösungen bestehen in den Merkmalskombinationen der unabhängigen Patentansprüche 1, 4 und 13.

Mittels der inneren und/oder der äußeren Stützeinrichtung gemäß Patentanspruch 1 wird die innere und/oder die äußere Kühlmittelleitung in einem für eine wirksame Wärmeübertragung günstigen engen Kontakt mit dem zugeordneten Elektrodenrohr unmittelbar oder mit einer ihrerseits mit dem betreffenden Elektrodenrohr wärmeübertragend in Verbindung stehenden Fläche gehalten. Die in Patentanspruch 4 beschriebenen erfindungsgemäßen Verfahrensmaßnahmen erlauben die Herstellung des aus Gründen der Wirksamkeit der Wärmeübertragung anzustrebenden engen Kontaktes zwischen innerer und/oder äußerer Kühlmittelleitung und zugeordnetem Elektrodenrohr bzw. zugeordneter Fläche auf fertigungstechnisch einfache Art und Weise. Dabei besteht insbesondere die Möglichkeit, die Form der Wandungen der Kühlmittelleitungen durch entsprechende plastische Verformung an die Form der zu kühlenden Gegenfläche anzupassen und so einen großflächigen engen Kontakt zwischen Kühlmittelleitungen und zugeordneten Gegenflächen herzustellen. Diese Möglichkeit ist insbesondere von Vorteil im Falle von Kühlmittelleitungen, deren Querschnitt vor der genannten plastischen Verformung etwa infolge bearbeitungsbedingter Deformationen von einer Idealform abweicht. Im Sinne der Erfindung kann die innere und/oder die äußere Stützeinrichtung nach der Verformung der jeweiligen Kühlmittelleitung und deren Formstabilisierung an dem Laser verbleiben oder aber von dem Laser entfernt werden. Die ebenfalls einfach strukturierte erfindungsgemäße Vorrichtung zur Durchführung des erfindungsgemäßen Herstellungsverfahrens ergibt sich aus Patentanspruch 13.

Bevorzugte Bauarten des erfindungsgemäßen Lasers sind in den abhängigen Patentansprüchen 2 und 3, bevorzugte Varianten des erfindungsgemäßen Herstellungsverfahrens in den abhängigen Patentansprüchen 5 bis 12 und bevorzugte Ausführungsformen der erfindungsgemäßen Fertigungsvorrichtung in den abhängigen Patentansprüchen 14 und 15 beschrieben.

Die Verwendung wenigstens eines inneren Stützrohres als innere Stützeinrichtung und/oder wenigstens eines äußeren Stützrohres als äußere Stützeinrichtung (Patentansprüche 2, 5 und 14) empfiehlt sich, da auf diese Art und Weise für eine wirksame großflächige Abstützung der betreffenden Kühlmittelleitung auf der von dem zugehörigen Elektrodenrohr abliegenden Seite und damit auch für eine besonders wirksame Anlage dieser Kühlmittelleitung an der zugeordneten, der Wärmeübertragung dienenden Gegenfläche gesorgt werden kann.

Einer Vereinfachung der plastischen Verformung der inneren und/ oder der äußeren Kühlmittelleitung im Rahmen des erfindungsgemäßen Verfahrens dienen die kennzeichnenden Merkmale der Patentansprüche 6 bis 8.

Gemäß Patentanspruch 9 wird die plastische Verformung der inneren und/oder der äußeren Kühlmittelleitung im Wesentlichen auf den Leitungsbereich zwischen den stutzenartigen Endstücken der Kühlmittelleitungen beschränkt. Die genannten Endstücke der Kühlmittelleitungen können daher ohne wesentliche vorherige Bearbeitung als Anschlussstutzen für die Kühlmittelversorgung des Lasers genutzt werden.

Wird der Verformungsdruck zur plastischen Verformung der Kühlmittelleitungen mittels eines Druckmediums erzeugt, das seiner Art nach bei dem späteren Laserbetrieb als Kühlmittel verwendet wird, so erübrigen sich aufwendige Maßnahmen zur Reinigung der Kühlmittelleitungen nach ihrer Verformung und vor Inbetriebnahme des Lasers.

Besonders einfach gestaltet sich das erfindungsgemäße Verfahren bei Verwendung von Kühlmittelleitungen, die vor ihrer Beaufschlagung mit dem inneren Verformungsdruck einen rechteckigen oder einen ovalen Querschnitt aufweisen (Patentanspruch 11). Werden derartige Kühlmittelleitungen vor ihrer Verformung gegenüber der zugehörigen, zur Wärmeübertragung genutzten Gegenfläche derart ausgerichtet, dass sie sich mit einem möglichst großen Flächenbereich ihrer Wandung parallel zu der betreffenden Gegenfläche erstrecken, so bedarf es anschließend nur noch einer verhältnismäßig geringfügigen plastischen Verformung der Kühlmittelleitungen, damit sich ein enger großflächiger Kontakt mit der zu kühlenden Fläche einstellt.

Ausweislich Patentanspruch 12 wird erfindungsgemäß mit dem Innenhochdruck-Umform-Verfahren ein bewährtes und den Besonderheiten des erfindungsgemäßen Anwendungsfalles Rechnung tragendes Verfahren angewandt.

Die Fertigungsvorrichtung nach Patentanspruch 15 zeichnet sich dadurch aus, dass ihre Stützeinrichtungen unmittelbar als Stützeinrichtungen für die Kühlmittelleitungen des endgefertigten Lasers genutzt werden können. Eine Demontage der Stützeinrichtungen der Fertigungsvorrichtung entfällt somit. Dies ist insbesondere vor dem Hintergrund bedeutsam, dass die Kühlmittelleitungen nach ihrer plastischen Verformung die Stützeinrichtungen beaufschlagen und sich deren Ausbau folglich schwierig gestalten kann.

Nachstehend wird die Erfindung anhand beispielhafter schematischer Darstellungen näher erläutert. Es zeigen:
- Fig. 1: eine teilgeschnittene Darstellung eines ersten Lasers koaxialer Bauart mit einer Kühleinrichtung,
- Fig. 2: eine Schnittdarstellung des Lasers nach Fig. 1 mit einer in Fig. 1 senkrecht zu der Zeichenebene sowie in Richtung der Linie II-II verlaufenden Schnittebene,
- Fign. 3a, 3b u. 3c: Darstellungen zu verschiedenen Phasen der Herstellung des Lasers nach den Fign. 1 und 2,
- Fig. 4: eine teilgeschnittene Darstellung eines zweiten Lasers koaxialer Bauart mit einer Kühleinrichtung und
- Fig. 5: den Gang des Laserstrahls im Innern des Lasers nach Fig. 4.

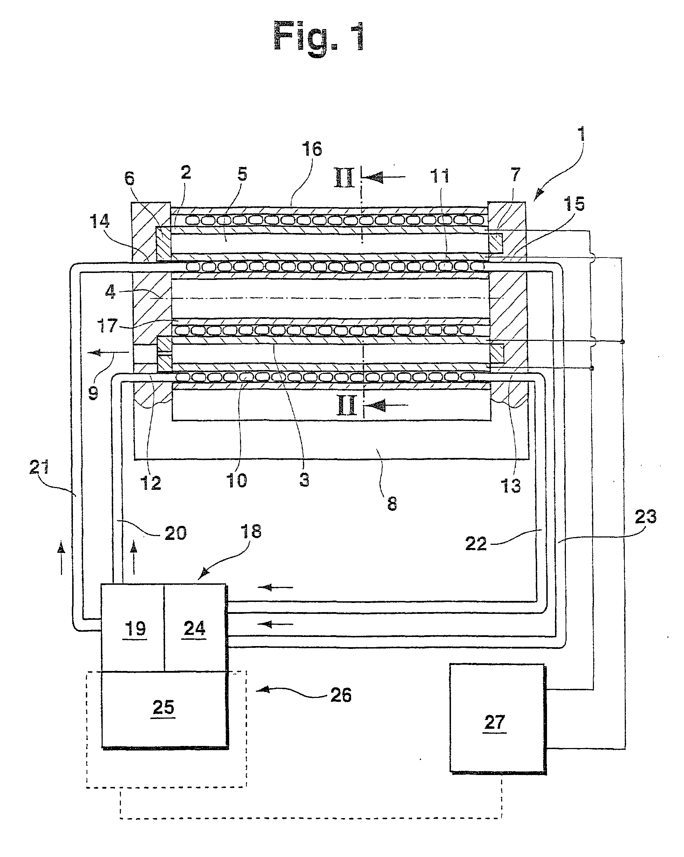

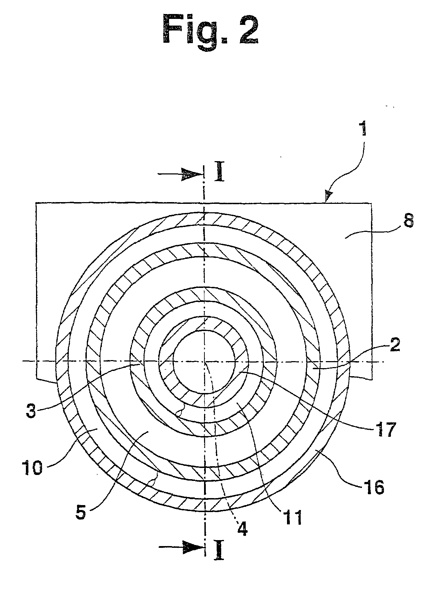

Ausweislich der Fign. 1 und 2 umfasst ein Laser 1 Anregungselektroden in Form zweier koaxialer Elektrodenrohre 2, 3. Der Verlauf der Darstellungsebene von Fig. 1 ist in Fig. 2 durch die Linie I-I, der Verlauf der Darstellungsebene von Fig. 2 in Fig. 1 durch die Linie II-II angedeutet. Einer gemeinsamen Achse der Elektrodenrohre 2, 3 ist das Bezugszeichen 4 zugeordnet.

Als inneres Elektrodenrohr ist das Elektrodenrohr 3 innerhalb des äußeren Elektrodenrohres 2 angeordnet. Infolge der Beabstandung der Elektrodenrohre 2, 3 in radialer Richtung verbleibt zwischen ihnen ein Entladungsraum 5 in Form eines ringraumartigen Zwischenraumes. Als laseraktives Medium enthält der Entladungsraum 5 CO₂. Anstelle von CO₂ kann beispielsweise auch CO verwendet werden. Resonatorspiegelanordnungen 6, 7 liegen sich an dem Entladungsraum 5 in dessen axialer Richtung gegenüber. Die Resonatorspiegelanordnungen 6, 7 sind an einem gemeinsamen Spiegelträger 8 angebracht und kreisringförmig gestaltet. Die kreisringförmigen Spiegelflächen der Resonatorspiegelanordnungen 6, 7 liegen dabei jeweils in einer Ebene, die senkrecht zu der Achse 4 der Elektrodenrohre 2, 3 verläuft. Die Resonatorspiegelanordnung 6 weist eine Stelle zur Auskoppelung eines Laserstrahls 9 auf.

Radial außerhalb des Elektrodenrohres 2 verläuft auf dessen achsparallelem Außenmantel eine äußere Kühlmittelleitung 10. Entsprechend ist im Innern des Elektrodenrohres 3 eine innere Kühlmittelleitung 11 vorgesehen. Sowohl die äußere Kühlmittelleitung 10 als auch die innere Kühlmittelleitung 11 werden von einem wendelartig gebogenen Kupferrohr mit abgeflachtem Rundquerschnitt gebildet. Die beiden Wendelachsen fallen mit der Achse 4 der Elektrodenrohre 2, 3 zusammen. Die äußere Kühlmittelleitung 10 läuft in stutzenartige Endstücke 12, 13, die innere Kühlmittelleitung 11 entsprechend in stutzenartige Endstücke 14, 15 aus.

An der Außenseite der wendelartig gebogenen äußeren Kühlmittelleitung 10 ist eine als äußeres Stützrohr 16 ausgebildete äußere Stützeinrichtung, an der Innenseite der wendelartigen inneren Kühlmittelleitung 11 eine als inneres Stützrohr 17 ausgebildete innere Stützeinrichtung vorgesehen. Auch das äußere Stützrohr 16 sowie das innere Stützrohr 17 sind koaxial mit den Elektrodenrohren 2, 3 ausgerichtet.

Die äußere Kühlmittelleitung 10 ist in radialer Richtung zwischen dem äußeren Stützrohr 16 und dem äußeren Elektrodenrohr 2 eingespannt. Infolgedessen ergibt sich eine enge Anlage der äußeren Kühlmittelleitung 10 an dem ihr zugewandten achsparallelen Außenmantel des Elektrodenrohres 2. In entsprechender Weise wird die innere Kühlmittelleitung 11 mittels des inneren Stützrohres 17 in engem Kontakt mit dem ihr zugewandten achsparallelen Innenmantel des inneren Elektrodenrohres 3 gehalten.

Aufgrund der beschriebenen Verhältnisse ist ein wirksamer Wärmeübergang von den sich während des Laserprozesses erhitzenden Elektrodenrohren 2, 3 auf das in der äußeren Kühlmittelleitung 10 sowie der inneren Kühlmittelleitung 11 strömende Kühlmedium, vorliegend Wasser, gewährleistet. Im Sinne einer umfassenden Wärmeabfuhr aus dem Innern des Entladungsraumes 5 wirkt sich dabei insbesondere der Umstand aus, dass die äußere Kühlmittelleitung 10 sowie die innere Kühlmittelleitung 11 aufgrund ihrer Querschnittsform mit verhältnismäßig großen Flächenbereichen ihrer Wandungen an den zu kühlenden Elektrodenrohren 2, 3 anliegen.

Die äußere Kühlmittelleitung 10 und die innere Kühlmittelleitung 11 sind Teile einer Kühleinrichtung 18 des Lasers 1. Die Kühleinrichtung 18 umfasst außerdem eine Umwälzpumpe 19, die über eine Zufuhrleitung 20 an das stutzenartige Endstück 12 der äußeren Kühlmittelleitung 10 und über eine Zufuhrleitung 21 an das stutzenartige Endstück 14 der inneren Kühlmittelleitung 11 angeschlossen ist. Durch die Zufuhrleitungen 20, 21 und die stutzenartigen Endstücke 12, 14 gelangt das verwendete Kühlwasser ausgehend von der Umwälzpumpe 19 in die wendelartigen Kühlmittelleitungen 10, 11. Auf seiner schraubenförmigen Bahn um das äußere Elektrodenrohr 2 sowie das innere Elektrodenrohr 3 nimmt das Kühlwasser die aus dem Inneren des Entladungsraumes 5 abzuführende Wärme auf, ehe es die äußere Kühlmittelleitung 10 an deren stutzenartigem Endstück 13 und die innere Kühlmittelleitung 11 an deren stutzenartigem Endstück 15 verlässt. Insofern sind die Kühlmittelleitungen 10, 11 Teile eines inneren Wärmetauschers des Lasers 1. Über Rücklaufleitungen 22, 23 wird das erhitzte Kühlwasser einem äußeren Wärmetauscher 24 zugeführt. Über den Wärmetauscher 24 wird das nach Passieren der Elektrodenrohre 2, 3 erhitzte Wasser unter entsprechender Abkühlung geleitet, ehe es dann von der Umwälzpumpe 19 erneut zu den wendelartigen Kühlmittelleitungen 10, 11 gefördert wird.

Die Kühlleistung der Kühleinrichtung 18 wird mittels einer Kühlanlagensteuerung 25 rechnergesteuert eingestellt. Die Kühlanlagensteuerung 25 wiederum ist Bestandteil einer Rechnersteuerung 26 der mit dem Laser 1 versehenen Bearbeitungsmaschine, vorliegend einer Laserschneidmaschine zum Schneiden von Blechen. Mit der Rechnersteuerung 26 ebenfalls verbunden ist ein Hochfrequenz(HF)-Generator 27, mittels dessen in bekannter Weise eine hochfrequente Wechselspannung an die Elektrodenrohre 2, 3 angelegt wird.

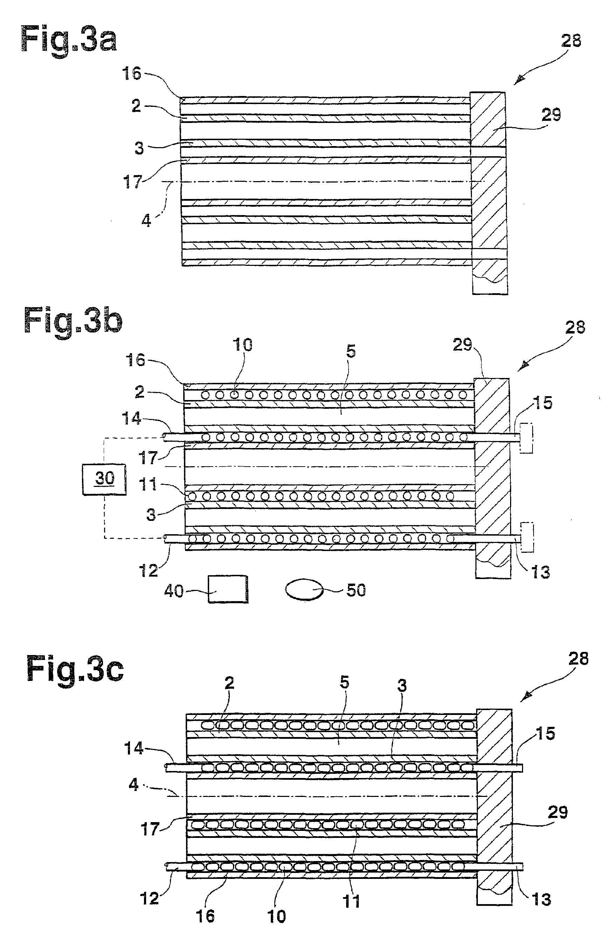

Bei der Herstellung des Lasers 1 werden u.a. die in den Fign. 3a, 3b und 3c veranschaulichten Montagephasen durchlaufen.

Gemäß Fig. 3a umfasst eine Fertigungsvorrichtung 28 einen Träger 29, an welchem das äußere Stützrohr 16, das innere Stützrohr 17, das äußere Elektrodenrohr 2 sowie das innere Elektrodenrohr 3 miteinander koaxial und lösbar gehalten sind. Abseits des Trägers 29 wird ein entsprechend abgelängtes erstes Kupferrohr mit Kreisquerschnitt über einem Dorn, dessen Außendurchmesser in etwa dem Außendurchmesser des äußeren Elektrodenrohres 2 entspricht, wendelartig gebogen. Geradlinig verbleiben dabei die stutzenartigen Endstücke 12, 13. Entsprechend wird ein zweites Kupferrohr mit Kreisquerschnitt über einem Dorn mit dem Außendurchmesser des inneren Elektrodenrohres 3 zu einer zweiten Wendel mit den geraden stutzenartigen Endstücken 14, 15 umgeformt. Die Wendel größeren Durchmessers bildet die äußere Kühlmittelleitung 10 im Ausgangszustand, die Wendel kleineren Durchmessers die innere Kühlmittelleitung 11 im Ausgangszustand.

Die Wendel größeren Durchmessers wird in den ringraumartigen Zwischenraum zwischen dem äußeren Stützrohr 16 und dem äußeren Elektrodenrohr 2 und die Wendel kleineren Durchmessers in den ringraumartigen Zwischenraum zwischen dem inneren Elektrodenrohr 3 und dem inneren Stützrohr 17 eingeschoben. Es ergeben sich dann die Verhältnisse gemäß Fig. 3b. Die stutzenartigen Endstücke 12, 13, 14, 15 der beiden Wendeln stehen dabei gut zugänglich von den übrigen Bauelementen des Lasers 1 vor.

In Figur 3b gezeigt ist der Idealfall, dass die anfänglich einen Kreisquerschnitt aufweisenden Kupferrohre bei dem Biegen zu Wendeln ihre ursprüngliche Querschnittsform beibehalten. In der Praxis ist aber häufig zu beobachten, dass die Wandungen gewendelter Rohre in ihren radial innen liegenden Bereichen bearbeitungsbedingt deformiert bzw. eingefallen sind und sich dementsprechend ein nierenförmiger Rohrquerschnitt ergibt. In Fig. 3b außerdem gezeigt sind Kupferleitungen 40, 50 mit rechteckigem bzw. ovalem Querschnitt, die ebenfalls als Rohlinge für die Kühlmittelleitungen 10, 11 dienen können.

Ausgehend von der Montagephase gemäß Fig. 3b werden die beiden Wendeln, d.h. die im Ausgangszustand befindlichen Kühlmittelleitungen 10, 11, in ihren Bereichen zwischen den stutzenartigen Endstücken 12, 13; 14, 15 induktiv erwärmt und dadurch weichgeglüht. Anschließend werden das stutzenartige Endstück 13 der äußeren Kühlmittelleitung 10 sowie das stutzenartige Endstück 15 der inneren Kühlmittelleitung 11 - wie in Fig. 3b gestrichelt angedeutet - dicht verschlossen und die stutzenartigen Endstücke 12, 14 an eine Hochdruckpumpe 30 angeschlossen. Letztere dient als Quelle für Druckwasser. Mittels dieses Druckwassers wird im Innern der erweichten äußeren Kühlmittelleitung 10 sowie im Innern der erweichten inneren Kühlmittelleitung 11 ein innerer Verformungsdruck erzeugt. Mittels dieses Verformungsdruckes werden die äußere Kühlmittelleitung 10 sowie die innere Kühlmittelleitung 11 nach dem Innenhochdruck-Umform-Verfahren verformt. Einer allseitig einheitlichen Querschnittsdehnung der äußeren Kühlmittelleitung 10 sowie der inneren Kühlmittelleitung 11 wirken die diesen benachbarten Elektrodenrohre 2, 3 einerseits und die Stützrohre 16, 17 andererseits entgegen. Es ergibt sich schließlich ausgehend von den ursprünglichen Rohrquerschnitten die in Fig. 3c dargestellten abgeflachten Rundquerschnitte der Kühlmittelleitungen 10, 11. Der Umfang der zu leistenden Querschnittsverformung ist abhängig von der Form des Ausgangsquerschnittes der plastisch zu verformenden Rohrleitungen. Im Falle eines ovalen Ausgangsquerschnittes (Leitung 50 gemäß Fig. 3b) etwa bedarf es einer geringeren Querschnittsverformung, um den Leitungsquerschnitt gemäß Fig. 3c zu erzeugen als im Falle eines kreisförmigen Ausgangsquerschnittes.

Infolge der Querschnittsdehnung unter der Wirkung des inneren Verformungsdruckes ist die äußere Kühlmittelleitung 10 zwischen dem äußeren Stützrohr 16 und dem äußeren Elektrodenrohr 2 und die innere Kühlmittelleitung 11 zwischen dem inneren Elektrodenrohr 3 und dem inneren Stützrohr 17 in radialer Richtung eingespannt. Insbesondere an den während des späteren Laserbetriebs zu kühlenden Elektrodenrohren 2, 3 liegen die Kühlmittelleitungen 10, 11 mit ihren Wandungen in engem Kontakt großflächig an.

Nach Abkühlung und damit verbundener Formstabilisierung der plastisch verformten Kühlmittelleitungen 10, 11 wird die gesamte Baueinheit aus Elektrodenrohren 2, 3, Kühlmittelleitungen 10, 11 und Stützrohren 16, 17 von dem Träger 29 der Fertigungsvorrichtung 28 abgenommen und mit weiteren Bauteilen zu dem Laser 1 gemäß Fig. 1 endmontiert.

Alternativ zu dem vorstehend beschriebenen Fertigungsablauf ist auch denkbar, dass die Stützrohre 16, 17 nach der Formstabilisierung der plastisch verformten Kühlmittelleitungen 10, 11 von diesen entfernt werden und die verbleibenden Bauteile dann zu einem Laser endmontiert werden, der nicht über Stützrohre der genannten Art verfügt.

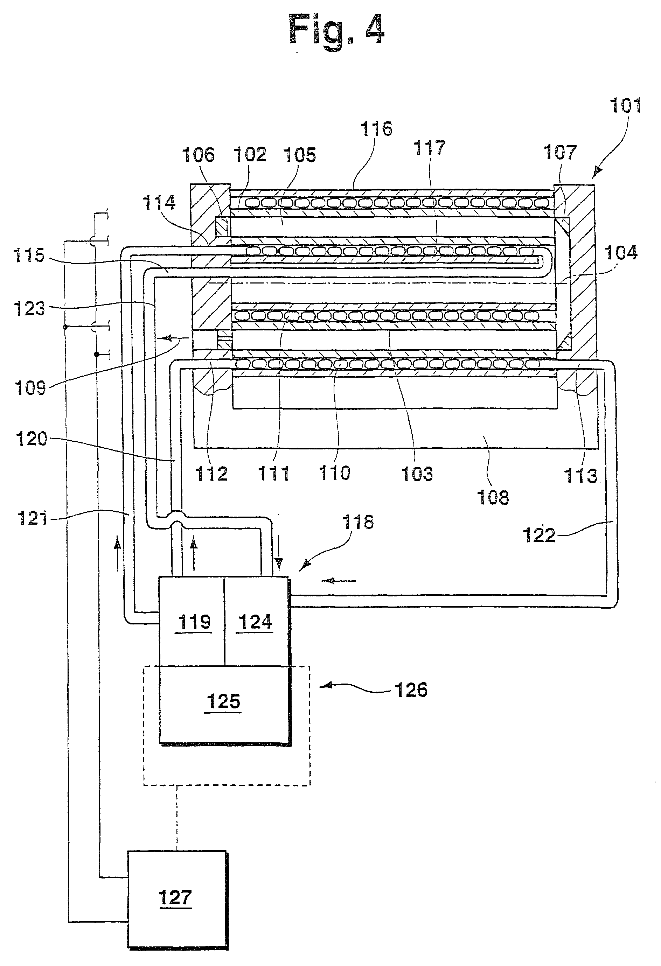

Ein Laser 101, wie ihn Fig. 4 zeigt, stimmt konstruktiv weitgehend mit dem vorstehend beschriebenen Laser 1 überein. Den Bauteilen gemäß den Fign. 1 bis 3 entsprechenden Bauteilen sind in Fig. 4 Bezugszeichen zugeordnet, welche gegenüber den Bezugszeichen der Fign. 1 bis 3 um 100 erhöht sind.

Von dem Laser 1 abweichend gestaltet ist der Laser 101 bezüglich seiner Resonatorspiegelanordnungen 106, 107 sowie bezüglich der Anordnung des stutzenartigen Endstückes 115 seiner inneren Kühlmittelleitung 111.

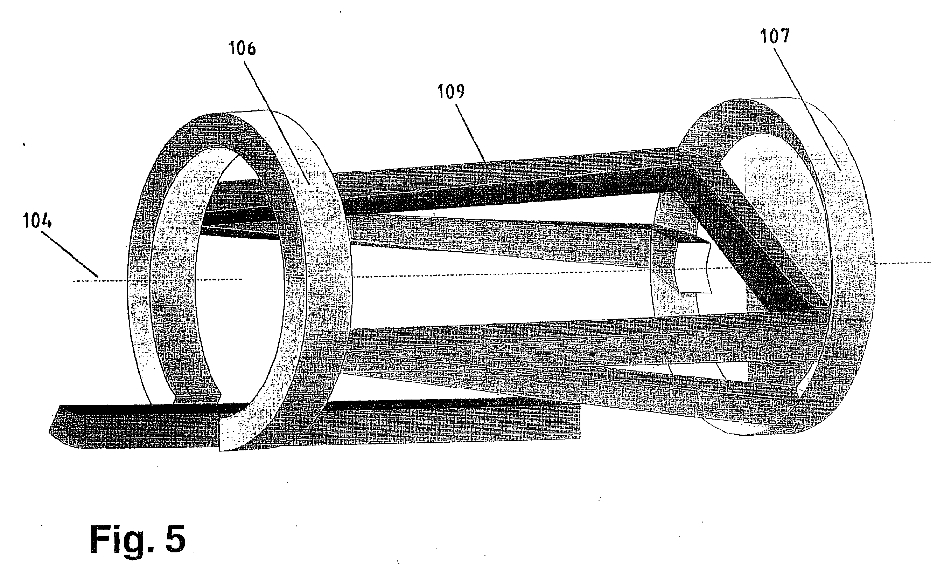

Wie Fig. 5 im Einzelnen entnommen werden kann, besitzt die Resonatorspiegelanordnung 107 eine konische Spiegelfläche; die Spiegelfläche der Resonatorspiegelanordnung 106 verläuft helixartig um die in Fig. 5 strichpunktiert angedeutete Achse 104 des Entladungsraumes 105. Infolge der beschriebenen Ausbildung der Resonatorspiegelanordnungen 106, 107 stellt sich an dem Laser 101 der in Fig. 5 gezeigte Gang des Laserstrahls 109 ein. An der Resonatorspiegelanordnung 107 verläuft der Laserstrahl 109 dabei unter anderem auch diametral durch den im Querschnitt kreisförmigen Innenraum der konischen Spiegelfläche. Dieser Innenraum ist folglich für den Laserstrahl 109 freizuhalten. Zu diesem Zweck wird die innere Kühlmittelleitung 111 wie aus Fig. 4 ersichtlich geführt. Die stutzenartigen Endstücke 114, 115 der inneren Kühlmittelleitung 111 durchsetzen dementsprechend ein und denselben Schenkel des Spiegelträgers 108. Anschließend an ihren gewendelten Abschnitt ist die innere Kühlmittelleitung 111 durch das innere Stützrohr 117 hindurchgeführt, ehe es im Innern des inneren Stützrohres 117 in dessen axialer Richtung verläuft.

Bei der Fertigung des Lasers 101 ist das innere Stützrohr 117 abweichend von dem zu den Fign. 3a bis 3c beschriebenen Verfahrensablauf mit der auf seiner Außenseite gewendelt aufgebrachten inneren Kühlmittelleitung 111 in das Innere des inneren Elektrodenrohres 103 eingeschoben worden.

## Patentansprüche

1. Laser mit wenigstens zwei Elektrodenrohren (2, 3; 102, 103), deren Achsen (4, 104) gleichgerichtet verlaufen und von denen das eine als inneres Elektrodenrohr (3, 103) unter Bildung eines als Entladungsraum (5, 105) dienenden Zwischenraumes innerhalb des anderen, äußeren Elektrodenrohres (2, 102) angeordnet ist sowie mit einer Kühleinrichtung (18, 118), welche zumindest eine innerhalb des inneren Elektrodenrohres (3, 103) angeordnete innere Kühlmittelleitung (11, 111) mit einer Wandung und/oder zumindest eine außerhalb des äußeren Elektrodenrohres (2, 102) angeordnete äußere Kühlmittelleitung (10, 110) mit einer Wandung umfasst, wobei die innere (11, 111) und/oder die äußere Kühlmittelleitung (10, 110) an ihrer Wandung mit dem zugeordneten Elektrodenrohr (2, 3; 102, 103) in wärmeübertragender Verbindung steht, **dadurch gekennzeichnet, dass** an der Innenseite der inneren Kühlmittelleitung (11, 111) eine innere Stützeinrichtung (17, 117) und/oder an der Außenseite der äußeren Kühlmittelleitung (10, 110) eine äußere Stützeinrichtung (16, 116) vorgesehen ist, wobei die innere Kühlmittelleitung (11, 111) mittels der inneren Stützeinrichtung (17, 117) mit ihrer Wandung an dem inneren Elektrodenrohr (3, 103) oder an einer damit wärmeübertragend in Verbindung stehenden Fläche anliegend gehalten ist und/oder wobei die äußere Kühlmittelleitung (10, 110) mittels der äußeren Stützeinrichtung (16, 116) mit ihrer Wandung an dem äußeren Elektrodenrohr (2, 102) oder an einer damit wärmeübertragend in Verbindung stehenden Fläche anliegend gehalten ist.

2. Laser nach Anspruch 1, **dadurch gekennzeichnet, dass** als innere Stützeinrichtung (17, 117) wenigstens ein mit seiner Achse (4, 104) in Richtung der Achse (4, 104) des inneren Elektrodenrohres (3, 103) verlaufendes inneres Stützrohr (17, 117) und/oder dass als äußere Stützeinrichtung (16, 116) wenigstens ein mit seiner Achse (4, 104) in Richtung der Achse (4, 104) des äußeren Elektrodenrohres (2, 102) verlaufendes äußeres Stützrohr (16, 116) vorgesehen ist.

3. Laser nach einem der vorhergehenden Ansprüche, **dadurch gekennzeichnet, dass** die innere Kühlmittelleitung (11, 111) mittels der inneren Stützeinrichtung (17, 117) in flächigem Kontakt mit dem inneren Elektrodenrohr (3, 103) und/oder dass die äußere Kühlmittelleitung (10, 110) mittels der äußeren Stützeinrichtung (16, 116) in flächigem Kontakt mit dem äußeren Elektrodenrohr (2, 102) gehalten ist.

4. Verfahren zur Herstellung eines Lasers (1, 101) mit wenigstens zwei Elektrodenrohren (2, 3; 102, 103) deren Achsen (4, 104) gleichgerichtet verlaufen und von denen das eine als inneres Elektrodenrohr (3, 103) unter Bildung eines als Entladungsraum (5, 105) dienenden Zwischenraumes innerhalb des anderen, äußeren Elektrodenrohres (2, 102) angeordnet ist, sowie mit einer Kühleinrichtung (18, 118), wobei innerhalb des inneren Elektrodenrohres (3, 103) zumindest eine mit einer plastisch verformbaren Wandung versehene innere Kühlmittelleitung (11, 111) der Kühleinrichtung (18, 118) und/oder außerhalb des äußeren Elektrodenrohres (2, 102) zumindest eine mit einer plastisch verformbaren Wandung versehene äußere Kühlmittelleitung (10, 110) der Kühleinrichtung (18, 118) angeordnet und an ihrer Wandung mit dem zugeordneten Elektrodenrohr (2, 3; 102, 103) in wärmeübertragende Verbindung gebracht wird, **dadurch gekennzeichnet, dass** die innere Kühlmittelleitung (11, 111) bei zumindest teilweiser Anordnung zwischen einer an ihrer Innenseite vorgesehenen inneren Stützeinrichtung (17, 117) und dem inneren Elektrodenrohr (3, 103) und/oder die äußere Kühlmittelleitung (10, 110) bei zumindest teilweiser Anordnung zwischen einer an ihrer Außenseite vorgesehenen äußeren Stützeinrichtung (16, 116) und dem äußeren Elektrodenrohr (2, 102) unter Beaufschlagung mit einem inneren Verformungsdruck und bei Abstützung an der zugeordneten Stützeinrichtung (16, 17; 116, 117) plastisch verformt und mit ihrer Wandung an dem zugeordneten Elektrodenrohr (2, 3; 102, 103) oder an einer damit wärmeübertragend in Verbindung stehenden Fläche angelegt wird.

5. Verfahren nach Anspruch 4, **dadurch gekennzeichnet, dass** als innere Stützeinrichtung (17, 117) wenigstens ein mit seiner Achse (4, 104) in Richtung der Achse (4, 104) des inneren Elektrodenrohres (3, 103) verlaufendes inneres Stützrohr (17, 117) an der Innenseite der inneren Kühlmittelleitung (11, 111) und/ oder dass als äußere Stützeinrichtung (16, 116) wenigstens ein mit seiner Achse (4, 104) in Richtung der Achse (4, 104) des äußeren Elektrodenrohres (2, 102) verlaufendes äußeres Stützrohr (16, 116) an der Außenseite der äußeren Kühlmittelleitung (10, 110) angeordnet wird.

6. Verfahren nach Anspruch 4 oder 5, **dadurch gekennzeichnet, dass** die Wandung der inneren (11, 111) und/oder die Wandung der äußeren Kühlmittelleitung (10, 110) vor der Beaufschlagung mit dem inneren Verformungsdruck erweicht wird.

7. Verfahren nach einem der Ansprüche 4 bis 6, **dadurch gekennzeichnet, dass** die Wandung der inneren (11, 111) und/oder die Wandung der äußeren Kühlmittelleitung (10, 110) vor der Beaufschlagung mit dem inneren Verformungsdruck unter Erwärmen erweicht wird.

8. Verfahren nach einem der Ansprüche 4 bis 7, wobei die innere (11, 111) und/oder die äußere Kühlmittelleitung (10, 110) eine metallene Wandung besitzt, **dadurch gekennzeichnet, dass** die Wandung der inneren (11, 111) und/oder die Wandung der äußeren Kühlmittelleitung (10, 110) vor der Beaufschlagung mit dem inneren Verformungsdruck durch Weichglühen erweicht wird.

9. Verfahren nach einem der Ansprüche 4 bis 8, wobei die innere (11, 111) und/oder die äußere Kühlmittelleitung (10, 110) stutzenartige Endstücke (12, 13; 14, 15; 112, 113; 114, 115) aufweist, **dadurch gekennzeichnet, dass** die Wandung der inneren (11, 111) und/oder die Wandung der äußeren Kühlmittelleitung (10, 110) vor der Beaufschlagung mit dem inneren Verformungsdruck lediglich in dem Bereich zwischen den stutzenartigen Endstücken (12, 13; 14, 15; 112, 113; 114, 115) erweicht wird.

10. Verfahren nach einem der Ansprüche 4 bis 9, **dadurch gekennzeichnet, dass** der innere Verformungsdruck an der inneren (11, 111) und/oder an der äußeren Kühlmittelleitung (10, 110) mittels des später als Kühlmittel verwendeten Mediums erzeugt wird.

11. Verfahren nach einem der Ansprüche 4 bis 10, **dadurch gekennzeichnet, dass** als innere und/oder als äußere Kühlmittelleitung eine Leitung (40, 50) vorgesehen wird, die vor der Beaufschlagung mit dem inneren Verformungsdruck einen rechteckigen oder einen ovalen Querschnitt aufweist.

12. Verfahren nach einem der Ansprüche 4 bis 11, **dadurch gekennzeichnet, dass** die innere (11, 111) und/oder die äußere Kühlmittelleitung (10, 110) durch Innenhochdruck-Umformen plastisch verformt wird.

13. Vorrichtung zur Durchführung des Verfahrens nach einem der Ansprüche 4 bis 12, **gekennzeichnet durch** eine innere Stützeinrichtung (17, 117) an der Innenseite der inneren Kühlmittelleitung (11, 111) und/oder eine äußere Stützeinrichtung (16, 116) an der Außenseite der äußeren Kühlmittelleitung (10, 110) sowie **durch** wenigstens eine mit der inneren (11, 111) und/oder mit der äußeren Kühlmittelleitung (10, 110) verbindbare Quelle (30) für ein strömungsfähiges Druckmedium zur Erzeugung des inneren Verformungsdruckes an der inneren (11, 111) und/oder an der äußeren Kühlmittelleitung (10, 110).

14. Vorrichtung nach Anspruch 13, **dadurch gekennzeichnet, dass** als innere Stützeinrichtung (17, 117) wenigstens ein mit seiner Achse (4, 104) in Richtung der Achse (4, 104) des inneren Elektrodenrohres (3, 103) verlaufendes inneres Stützrohr (17, 117) und/oder dass als äußere Stützeinrichtung (16, 116) wenigstens ein mit seiner Achse (4, 104) in Richtung der Achse (4, 104) des äußeren Elektrodenrohres (2, 102) verlaufendes äußeres Stützrohr (16, 116) vorgesehen ist.

15. Vorrichtung nach Anspruch 13 oder 14, **dadurch gekennzeichnet, dass** die innere (17, 117) und/oder die äußere Stützeinrichtung (16, 116) als nach der Herstellung des Lasers (1, 101) an diesem verbleibende Stützeinrichtung (16, 17; 116, 117) ausgebildet ist.
